# EUROPEAN PATENT APPLICATION

(11) **EP 4 661 168 A1**
(43) Date of publication of application: **10.12.2025**
(21) Application number: 25150670.5
(22) Date of filing: 08.01.2025
(51) Int. Cl.: H01M 50/119, H01M 50/15, H01M 50/159, H01M 50/342

(54) **SECONDARY BATTERY**

(30) Priority: 03.06.2024 KR 20240072708
(71) Applicant: Samsung SDI Co., Ltd., Yongin-si, Gyeonggi-do 17084 (KR)
(72) Inventor: JUNG, Yeonho, Yongin-si 17084 (KR); LIM, Hyunyoung, Yongin-si 17084 (KR); BAEK, Soomin, Yongin-si 17084 (KR)
(74) Representative: Marks & Clerk LLP

(57) **Abstract**

Aspects of the present disclosure relate to a secondary battery, and specifically, a secondary battery including a cap plate or a can having heterogeneous metal layers. To solve the technical problems herein, a secondary battery in accordance with embodiments of the present disclosure may include an electrode assembly comprising a positive electrode plate, a negative electrode plate, and a separator disposed between the positive electrode plate and the negative electrode plate, a can configured to provide a space for accommodating the electrode assembly, and a cap plate joined to an opening of the can and configured to form a through-hole, wherein the cap plate may include a first metal layer formed of a first metal and a second metal layer formed of a second metal different from the first metal, and the through-hole may be formed to pass through the first metal layer and the second metal layer.

## Description

### BACKGROUND

### 1. Field

Aspects of the present disclosure relate to a secondary battery. Specifically, aspects of the present disclosure relate to a secondary battery including a cap plate or a can having heterogeneous metal layers.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The technical problem to be solved by the present disclosure is to provide a secondary battery in which mechanical and thermal rigidity is improved so as to solve the problems described above.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

In order to solve the technical problems above, a secondary battery in accordance with embodiments of the present disclosure may include an electrode assembly comprising a positive electrode plate, a negative electrode plate, and a separator disposed between the positive electrode plate and the negative electrode plate, a can configured to provide a space for accommodating the electrode assembly, and a cap plate joined to an opening of the can and configured to form a through-hole, wherein the cap plate may include a first metal layer formed of a first metal and a second metal layer formed of a second metal different from the first metal, and the through-hole may be formed to pass through the first metal layer and the second metal layer.

According to some embodiments, the cap plate may have a clad structure composed of the first metal layer and the second metal layer.

According to some embodiments, a melting point and yield strength of the second metal may be higher than a melting point and yield strength of the first metal, respectively.

According to some embodiments, the second metal may be any one of stainless steel, nickel, or copper.

According to some embodiments, the first metal may be aluminum.

According to some embodiments, the first metal layer may be disposed on an upper portion of the cap plate and joined to a vent portion inserted into the through-hole, and the second metal layer may be disposed on a lower portion of the cap plate.

According to some embodiments, the second metal layer may be disposed on an entirety of the lower portion of the cap plate.

According to some embodiments, the second metal layer may be in contact with the can.

According to some embodiments, the second metal layer may be disposed around the through-hole.

According to some embodiments, the cap plate having the first metal layer and the second metal layer may be manufactured by any one of diffusion welding, electromagnetic pulse technology (EMPT), or friction stir welding.

According to some embodiments, the first metal layer may be disposed on a lower portion of the cap plate and joined to a vent portion inserted into the through-hole, and the second metal layer may be disposed on an upper portion of the cap plate.

According to some embodiments, the can may include an inner portion and an outer portion formed of different metals, and the inner portion of the can may be joined to the second metal layer.

According to some embodiments, the second metal layer may be disposed on an entirety of the upper portion of the cap plate.

According to some embodiments, the inner portion may be formed of a same material as the second metal layer.

According to some embodiments, a melting point and yield strength of a material of the inner portion may be higher than a melting point and yield strength of a material of the outer portion, respectively.

According to some embodiments, the material of the inner portion may be any one of stainless steel, nickel, or copper.

According to some embodiments, the material of the outer portion may be aluminum.

According to some embodiments, joining strength between the second metal layer and the inner portion may be higher than joining strength between the first metal layer and the vent portion.

According to some embodiments, the second metal may comprise stainless steel, and the stainless steel may be SUS304 or SUS316.

According to some embodiments, the first metal may be any one of Al3003, Al3005, or Al3104.

According to some embodiments of the present disclosure, the cap plate and the can of the secondary battery are composed of heterogeneous metals with different melting points and yield strengths, thereby preventing deformation of the cap plate and the loss of the degassing area in a case where an event occurs in the secondary battery.

According to some embodiments of the present disclosure, the joining strength between the can and the cap plate of the secondary battery may be increased.

According to some embodiments of the present disclosure, there may be advantages in the manufacturing process due to the can and the cap plate of the secondary battery being composed of heterogeneous metals.

At least some of the above and other features of the invention are set out in the claims.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view showing a prismatic type secondary battery.
FIG. 2 illustrates a cross-sectional view showing the secondary battery taken along line X-X' according to embodiments of the present disclosure.
FIG. 3 illustrates a cross-sectional view of a secondary battery according to embodiments of the present disclosure.
FIG. 4 illustrates a cross-sectional view of a secondary battery according to embodiments of the present disclosure.
FIG. 5 illustrates a cross-sectional view of a secondary battery according to embodiments of the present disclosure.
FIG. 6 is a diagram showing the effect of improving buckling of the cap plate according to embodiments of the present disclosure.
FIG. 7 illustrates a diagram illustrating an effect of maintaining the degassing area of the vent portion.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

Prismatic type secondary batteries are generally batteries that use aluminum cans as exterior materials. Prismatic type secondary batteries have the disadvantage of low space efficiency and increased battery weight. Prismatic type secondary batteries have the advantage of being able to be equipped with various safety devices, being resistant to external impact, and even if a problem occurs in one cell, preventing the problem from spreading to next cells.

Battery fires and explosions are caused by thermal runaway of battery cells. Thermal runaway refers to a phenomenon in which a temperature rises in cell units of a battery due to internal or external thermal factors and/or chemical or physical impact, leading to a fire. At this time, as the temperature rises, gas generated inside the cell has to be discharged smoothly to prevent an increase in internal pressure. This is achieved through a vent portion formed in a cap plate of a prismatic type secondary battery. In the case of aluminum exterior cans, there is a problem in that an area around a vent hole melts and disappears during a thermal runaway event, and thus, a vent degassing area is not secured.

During impact/crush evaluation assuming an internal short circuit due to mechanical impact of battery cells, there is a problem in that a cap plate of a prismatic type secondary battery including an aluminum exterior can buckles and a vent portion with the smallest cross-sectional area bends. In addition, there is a problem in that a central portion of a cap plate collapses due to the weight of an internal electrode plate in a case where an aluminum exterior can and an aluminum cap plate are joined or when an event occurs. Secondary batteries which address the problems described herein are provided.

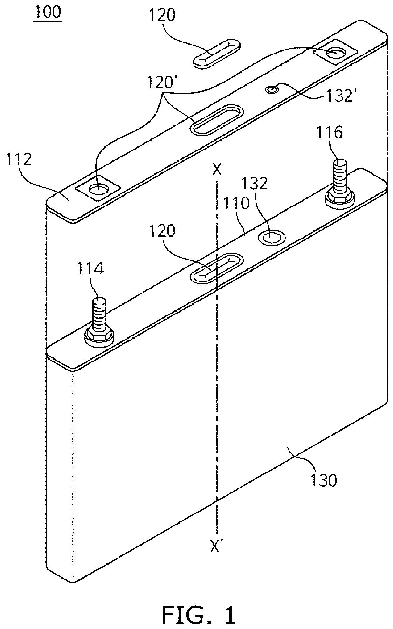

FIG. 1 illustrates a perspective view showing a prismatic type secondary battery.

As illustrated in FIG. 1, a prismatic type secondary battery 100 may include an electrode assembly including a positive electrode plate, a negative electrode plate, and a separator disposed between the positive electrode plate and the negative electrode plate to insulate the positive electrode plate and the negative electrode plate from each other, a can 130 providing a space to accommodate the electrode assembly, and a cap plate 112 joined to an opening of the can and forming a through-hole 120'. A cap assembly 110 may include a cap plate 112, the through-hole 120', a first terminal 114, a second terminal 116, and a vent portion 120. The cap assembly 110 of the prismatic type secondary battery 100 may further include a terminal plate, a current collector, a sub-plate, an upper insulating plate, and a lower insulating plate.

Throughout the present specification, the secondary battery include any types of secondary batteries, in which an exterior material may be formed of metal, such as can type pouch batteries and cylindrical type batteries, in addition to prismatic type secondary batteries.

The through-hole 120' may refer to any portion where a hole passing through the cap plate 112 is formed. For example, the through-hole 120' into which the vent portion 120 is inserted may be a portion through which gas generated inside the secondary battery 100 is discharged. The through-hole 120' may be a hole through which a current collector connecting the first terminal 114 or the second terminal 116 to an electrode tab of the electrode assembly passes. The through-hole 120' may be used to encompass an electrolyte injection port 132 through which an electrolyte is injected into the can 130 of the secondary battery and a cap 132' is joined thereto. The first terminal 114 may be a positive terminal, and the second terminal 116 may be a negative terminal. Alternatively, the first terminal 114 may be a negative terminal, and the second terminal 116 may be a positive terminal.

The vent portion 120 may be configured to be opened in a case where the internal pressure of the secondary battery exceeds a predetermined critical pressure. The vent portion 120 may prevent an explosion of the secondary battery or prevent a chain exothermic reaction between one secondary battery and another secondary battery disposed close thereto. The vent portion 120 may include a notch. The notch may be removed to a certain thickness or may be at least one groove. The notch may break if the internal pressure of the can exceeds a critical pressure.

An electrode assembly may be formed by winding or stacking a stack of a first electrode plate, a separator, and a second electrode plate, which are formed as thin plates or films. When the electrode assembly is a wound stack, a winding axis may be parallel to the longitudinal direction (e.g., the y direction) of the case. In other embodiments, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first current collector. In some embodiments, when the first electrode plate is manufactured, the first electrode tab may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second current collector. In some embodiments, the second electrode tab may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab may be located on the left side of the electrode assembly, and the second electrode tab may be located on the right side of the electrode assembly. In other embodiments, the first electrode tab and the second electrode tab may be located on one side of the electrode assembly in the same direction. Here, for convenience of description, the left and right sides are defined according to the secondary battery as oriented in FIG. 1, and the positions thereof may change when the secondary battery is rotated left and right or up and down.

The first electrode tab of the first electrode plate and the second electrode tab of the second electrode plate may be respectively positioned at both ends (e.g., opposite ends) of the electrode assembly. In some embodiments, the electrode assembly may be accommodated in the case along with an electrolyte. In addition, in the electrode assembly, the first current collector and the second current collector may be welded and connected to the first electrode tab of the first electrode plate and the second electrode tab of the second electrode plate exposed on both sides, respectively, to then be positioned thereat, respectively.

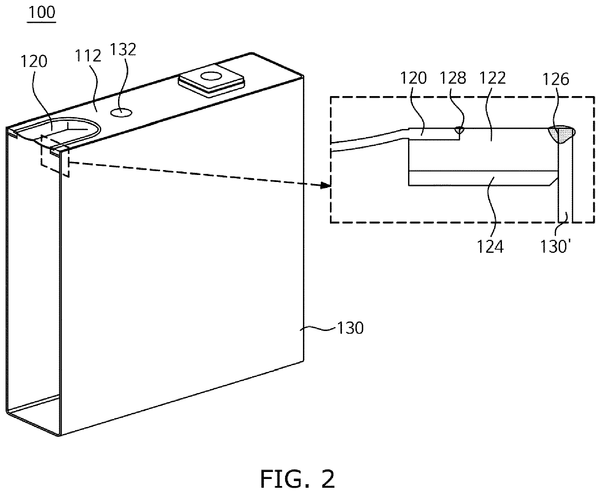

FIG. 2 illustrates a cross-sectional view showing the secondary battery taken along line X-X' according to embodiments of the present disclosure.

As illustrated in FIG. 2, the cap plate 112 is joined to an upper portion 130' of a can through a first vertical surface 126 of the cap plate 112. The cap plate 112 is joined to the vent portion 120 through a second vertical surface 128 of the cap plate 112. The cap plate 112 includes a first metal layer 122 formed of a first metal and a second metal layer 124 formed of a second metal.

The cap plate 112 may be formed so that the through-hole 120' passes through the first metal layer 122 and the second metal layer 124. In a case where the through-hole 120' corresponds to a portion through which gas generated inside the secondary battery is discharged, the vent portion 120 may be inserted into the through-hole 120'. For example, the vent portion 120 may be inserted into the through-hole 120' and may be in contact with the first metal layer 122 of the cap plate 112 and/or the second metal layer 124 of the cap plate 112.

The cap plate 112 may have a clad structure composed of the first metal layer 122 and the second metal layer 124. For example, the cap plate 112 may be manufactured by overlapping, rolling, and mechanically bonding metal plates.

According to embodiments of the present disclosure, the second metal of the second metal layer 124 may be configured to have a higher melting point and yield strength than the first metal of the first metal layer 122. For example, the second metal may be any one of stainless steel, nickel (Ni), or copper (Cu). The stainless steel may be SUS304 or SUS316. The first metal may be aluminum. Aluminum may be any one of Al3003, Al3005, or Al3104.

Stainless steel is a material that improves corrosion resistance and wear resistance by mixing chromium (Cr) and nickel (Ni) with iron. Stainless steel materials are classified according to the content of chromium and nickel. The stainless steel material may include SUS304 or SUS316. SUS304 is a stainless steel material containing approximately 18% chromium and 8% nickel. SUS304 has strong yield strength and is resistant to high-temperature oxidation, and thus may be used even in high-temperature environments. SUS316 contains about 18% chromium, 12% nickel, and molybdenum (Mo). SUS316 is a material that has the advantages of SUS304 and has enhanced corrosion resistance.

For example, the yield strength of Al3003-H14 is about 145 Mpa or less, while the yield strength of SUS304 is about 215 Mpa or less. Accordingly, the yield strength of SUS304 is higher than the yield strength of Al3003-H14. Meanwhile, the melting point of Al3003-H14 is about 643°C to 654°C, while the melting point of SUS304 is about 1,400°C to 1,455°C. Accordingly, the melting point of SUS304 is higher than the melting point of Al3003-H14.

Meanwhile, nickel is a good electrical and thermal conductor, and such properties are useful in materials such as battery electrodes and electrical connection parts. In addition, since nickel has high ductility, nickel is easily processed into various shapes. Therefore, nickel may be used for the introduction of the second metal layer and the process of manufacturing the multilayer structure in the secondary battery according to various embodiments of the present disclosure. The melting point of nickel is approximately 1,455°C, which is higher than the melting point of aluminum. Accordingly, nickel may be used as a material for the second metal layer that is not affected by thermal runaway of the secondary battery. The melting point of copper, which may be used as the second metal material for the second metal layer, is 1,085°C, which is higher than the melting point of aluminum. Copper is easily processed and has high yield strength.

Throughout the present specification, aluminum includes not only pure aluminum but also aluminum alloys. Al3003 is an Al-Mn based aluminum alloy material composed of manganese (Mn), silicon (Si), iron (Fe), copper (Cu), zinc (Zn), etc. and mostly aluminum (Al). Al3003 is a representative alloy of the Al3000 series. The addition of manganese increases the strength of pure aluminum without deteriorating the processability and corrosion resistance. Al3003-H14 is an aluminum alloy obtained by work hardening without additional heat treatment so as to obtain specific mechanical properties. The number after H indicates the final degree of work hardening. As the number increases, it means that the strength increases.

Al3004 is an aluminum material with higher strength and moldability than Al3003. Al3004 is an Al-Mn based aluminum alloy material composed of manganese (Mn), iron (Fe), silicon (Si), zinc (Zn), copper (Cu), etc. and mostly aluminum. By adding about 1 % of magnesium (Mg) to the alloy corresponding to Al3004, the strength may be further increased and the resulting material may be used as an aluminum can body.

Al3003-0, Al3003-H12, Al3003-H14, Al3003-H16, Al3003-H18, Al3004-0, Al3004-H32, Al3004-H34, Al3004-H36, Al3004-H38, and the like may be used as an exterior material of the secondary battery according to embodiments of the present disclosure.

Aluminum is weaker than stainless steel, but is lighter in weight than stainless steel. Therefore, as described below, in the secondary battery according to various embodiments of the present disclosure, the cap plate 112 may be formed so that the first metal layer formed of the first metal, which may be aluminum, has a larger volume than the second metal layer formed of the second metal, which may be stainless steel.

Stainless steel has higher weldability than aluminum, and the inter-stainless steel welding strength is higher than the inter-aluminum welding strength. Such characteristics are taken into consideration in a case of manufacturing the can or the cap plate formed of heterogeneous metals in the present disclosure, and thus, the arrangement of the layers may be appropriately adjusted. In various embodiments to be described below, the can or the cap plate formed of the first metal layer and the second metal layer formed of specific materials are described. However, in consideration of differences in properties such as welding strength, yield strength, and difference in melting point, metal combinations of various materials as described above may be used, and the structure to prevent the events of the secondary battery may be designed with the can or the cap plate formed of the multi-layered metal layer.

According to embodiments of the present disclosure, as illustrated in FIG. 2, the first metal layer 122 may be disposed at the upper portion of the vertical cross-section of the cap plate 112, and the second metal layer 124 may be disposed at the lower portion of the vertical cross-section of the cap plate 112. At this time, as illustrated in FIG. 2, the second metal layer 124 may be disposed at the entire lower portion of the cap plate 112 and the second metal layer 124 may be in contact with the upper portion 130' of the can. In the present specification, the contact may not mean direct joint contact. In addition, the vent portion 120 may be inserted into the through-hole 120' passing through the first metal layer 122 and the second metal layer 124. In particular, the vent portion 120 may be joined to the first metal layer 122.

The vent portion 120, the can 130, and the upper portion of the cap plate 112 may be formed of the first metal, and the lower portion of the cap plate 112 may be formed of the second metal.

According to some embodiments of the present disclosure, the joining between the upper portion of the cap plate 112 and the can 130 may be performed on the first vertical surface 126 and a region near the first vertical surface 126. The region near the first vertical surface 126 where the joining is performed may include, for example, the horizontal (upper) surface of the cap plate 112 and the horizontal (upper) surface of the can 130 in contact with the first vertical surface 126.

In addition, the joining between the vent portion 120 and the cap plate 112 may be performed on the second vertical surface 128 and a region near the second vertical surface 128. The region near the second vertical surface 128 where the joining is performed may include, for example, the horizontal (upper) surface of the cap plate 112 and the horizontal (upper) surface of the vent portion 120 in contact with the second vertical surface 128.

There is no limitation to the joining as long as the joining is performed by a metal joining method, and the joining may be welding. For example, the welding may be laser welding or ultrasonic welding.

In a case where the first metal layer 122 and the second metal layer 124 are disposed as described above, the joining on the first vertical surface 126 and the region near the first vertical surface 126 are performed by welding between the first metal on the upper portion of the cap plate 112 and the first metal of the can 130. The joining on the second vertical surface 128 and the region near the second vertical surface 128 may be performed by welding between the first metal on the upper portion of the cap plate 112 and the first metal of the vent portion 120. Due to the joining between homogeneous metals, the joining may be facilitated. For example, the first metal may be aluminum and the second metal may be stainless steel. In a case where the vent portion 120 is formed of aluminum and the vent portion 120 is inserted into and joined to the through-hole 120' in the upper portion of the cap plate 112 formed of aluminum, the joining between aluminums, which are the same metal, may be facilitated.

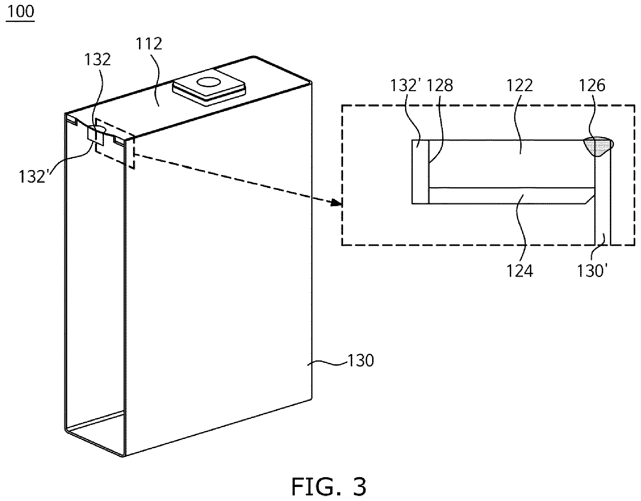

FIG. 3 illustrates a cross-sectional view of a secondary battery according to embodiments of the present disclosure. Regarding FIG. 3, the description of parts described above with respect to FIG. 2 is omitted.

FIG. 3 illustrates a portion of a cross-section of the electrolyte injection port 132 passing through the cap plate. FIG. 3 is the same as the cap plate 112 described with reference to FIG. 2 and is a diagram illustrating a case where the through-hole 120' is the electrolyte injection port 132. Since the first metal layer 122 is disposed at the upper portion of the cap plate 112, the joining to the upper portion 130' of the can may be facilitated. The joining may be performed on the first vertical surface 126 and the region near the first vertical surface 126. The region near the first vertical surface 126 where the joining is performed may include, for example, the horizontal (upper) surface of the cap plate 112 and the horizontal (upper) surface of the can 130 in contact with the first vertical surface 126.

The cap 132' is joined to an electrolyte injection port 132. The cap 132' may not be directly joined to the cap plate 112. The cap 132' may be formed of various durable materials that may prevent electrolyte leakage.

Although not illustrated in the drawing, the above-described configuration may also be applied to a cross section cutting through the center of the through-hole 120' where the first terminal 114 or the second terminal 116 may be disposed.

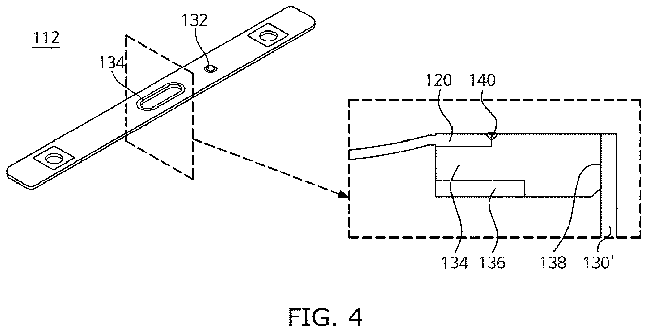

FIG. 4 illustrates a cross-sectional view of a secondary battery according to embodiments of the present disclosure. Regarding FIG. 4, the description of parts described above with respect to the above-described configuration is omitted. Although only the cap plate 112 is illustrated on the left side of FIG. 4, the cross-section including the upper portion 130' of the can is described.

As illustrated in FIG. 4, according to embodiments of the present disclosure, in a case where the first metal layer 134 is disposed at the upper portion of the cap plate 112 and the second metal layer 136 is disposed at the lower portion of the cap plate 112, the second metal layer 136 may be disposed only around the through-hole 120' in the lower portion. In this case, the first metal layer 134 and the second metal layer 136 may be joined and disposed in the cladding method described above. Alternatively, the first metal layer 134 and the second metal layer 136 may be joined into one body by any one of diffusion welding, electromagnetic pulse technology (EMPT), or friction stir welding.

The upper portions of the vent portion 120, the can 130, and the cap plate 112 may be formed of the first metal, and the lower portion of the cap plate 112 may be formed of the second metal.

The cap plate 112 and the can 130 may be joined to each other on the first vertical surface 138 and the region near the first vertical surface 138. The region near the first vertical surface 138 where the joining is performed may include, for example, the horizontal (upper) surface of the cap plate 112 and the horizontal (upper) surface of the can 130 in contact with the first vertical surface 126. The upper portions of the can 130 and the cap plate 112 may be formed of the homogeneous metal of the first metal, and thus, the joining may be facilitated.

In addition, the joining between the vent portion 120 and the cap plate 112 may be performed on the second vertical surface 140 and a region near the second vertical surface 140. The region near the second vertical surface 140 where the joining is performed may include, for example, the horizontal (upper) surface of the cap plate 112 and the horizontal (upper) surface of the vent portion 120 in contact with the second vertical surface 140. The upper portions of the vent portion 120 and the cap plate 112 may be formed of the homogeneous metal of the first metal, and thus, the joining may be facilitated.

There is no limitation to the joining as long as the joining is performed by a metal joining method, and the joining may be welding. For example, the welding may be laser welding or ultrasonic welding.

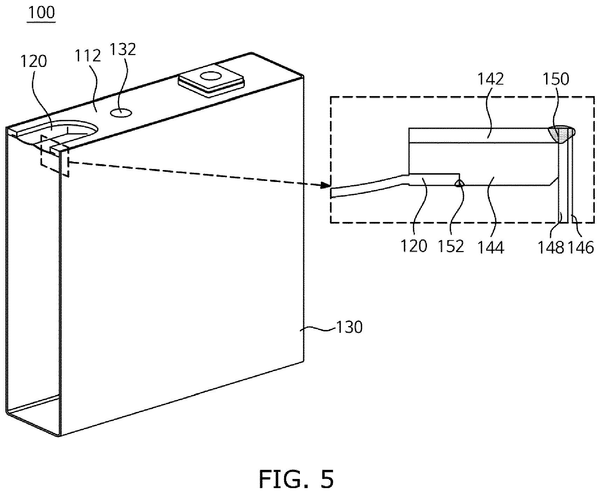

FIG. 5 illustrates a cross-sectional view of a secondary battery according to embodiments of the present disclosure. Regarding FIG. 5, the description of parts described above with respect to the above-described configuration is omitted.

As illustrated in FIG. 5, according to embodiments of the present disclosure, a second metal layer 142 may be disposed at an upper portion of a cap plate 112, and a first metal layer 144 may be disposed at a lower portion of the cap plate 112. The second metal layer 142 may be disposed at the entire upper portion of the cap plate 112.

The first metal layer 144 may be joined to a vent portion 120 inserted into a through-hole 120'. The joining between the first metal layer 144 and the vent portion 120 has the advantage of being joined between homogeneous metals of the first metal, and thus, the joining may be facilitated.

A can 130 may include an inner portion 148 and an outer portion 146. The inner portion 148 and the outer portion 146 may each be formed of heterogeneous metals. The inner portion 148 of the can may be formed of the same material as the second metal layer 142 disposed at the upper portion of the cap plate 112. The inner portion 148 of the can may be joined to the second metal layer 142 disposed at the upper portion of the cap plate 112. The material for the inner portion 148 of the can may have a higher melting point and yield strength than the material for the outer portion 146 of the can.

For example, the inner portion 148 of the can 130 may be formed of the same second metal as the second metal layer 142. The welding strength between the second metals may be configured to be higher than the welding strength between the first metals. That is, the joining strength between the second metal layer 142 and the inner portion 148 of the can 130 may be configured to be higher than the joining strength between the first metal layer 144 and the vent portion 120. At this time, the vent portion 120 may be formed of the same first metal as the first metal layer 144.

For example, in a case where the second metal is stainless steel and the first metal is aluminum, the strength of the inter-stainless steel joining is higher than the strength of the inter-aluminum joining. Accordingly, in a case where an event occurs in the secondary battery, it is possible to prevent separation between the can 130 and the cap plate 112. For example, in a case where an event occurs in which the internal pressure of the secondary battery increases and the vent portion ruptures, separation between the can 130 and the cap plate 112 may be prevented.

Meanwhile, as illustrated in FIG. 5, in some embodiments, the inner portion 148 of the can 130 and the second metal layer 142 disposed at the upper portion of the cap plate 112 may be joined to a first vertical surface 150 of the cap plate 112. The region where the joining is performed may correspond to the first vertical surface 150 and a region near the first vertical surface 150. The region near the first vertical surface 150 may include a horizontal (upper) surface of the cap plate 112 adjacent to the first vertical surface 150 and a horizontal (upper) surface of the can 130. The horizontal (upper) surface of the cap plate 112 adjacent to the first vertical surface 150 may include a horizontal (upper) surface of the second metal layer 142. The horizontal (upper) surface of the can 130 may include a horizontal (upper) surface of an inner portion and a horizontal (upper) surface of an outer portion. The first vertical surface 150 may refer to only a vertical surface of the second metal layer 142 of the cap plate 112.

In a case where the inner portion 148 of the can 130 and the second metal layer 142 disposed at the upper portion of the cap plate 112 are joined through the first vertical surface 150 of the cap plate 112, the inner portion 148 of the can 130 and the second metal layer 142 may be easily joined because the joining is between the second metals that are homogeneous metals. The joining may refer to welding joining.

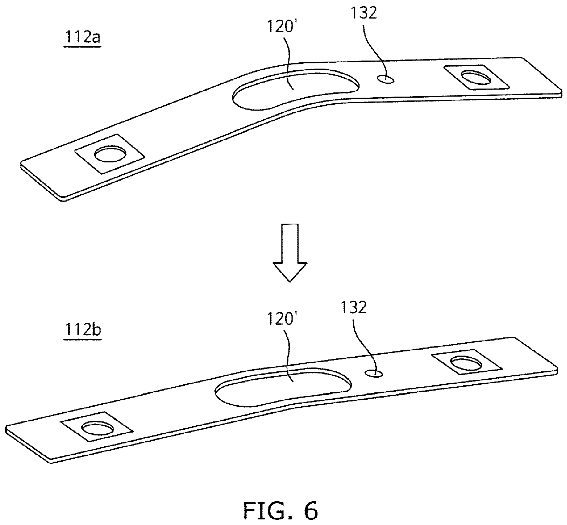

FIG. 6 is a diagram showing the effect of improving buckling of the cap plate according to embodiments of the present disclosure.

During impact/crush evaluation assuming an internal short circuit due to mechanical impact of the cell, the cap plate 112a composed only of the first metal experiences a buckling phenomenon. Accordingly, while the vent portion 120 and the through-hole 120', which have the smallest cross-sectional area, have a large degree of bending, the cap plate 112b, which includes the first metal layer formed of the first metal and the second metal layer formed of the second metal, may have a weakened degree of bending around the vent portion 120 and the through-hole 120'. This may be because the second metal included in the cap plate 112b has higher yield strength than the first metal.

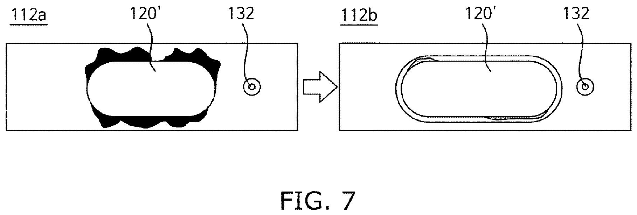

FIG. 7 illustrates a diagram illustrating an effect of maintaining the degassing area of the vent portion.

An area around the through-hole formed by the through-hole 120' around the vent portion 120 during a thermal runaway event of the secondary battery 100 is defined as a vent degassing area. The cap plate 112a composed only of the first metal may be lost by melting the degassing area of the vent portion 120 in a case where a thermal runaway temperature reaches the melting point of the first metal.

Meanwhile, according to various embodiments of the present disclosure, the cap plate 112b including the first metal layer formed of the first metal and the second metal layer formed of the second metal includes the second metal with a higher melting point than the first metal.

Accordingly, even in a case where the thermal runaway temperature reaches the melting point of the first metal, the second metal layer is not lost and the degassing area of the vent portion 120 may be maintained. Accordingly, gas generated inside the secondary battery 100 may be smoothly discharged, thereby preventing a larger event from occurring in the secondary battery.

Meanwhile, in the case of the secondary battery 100 of FIG. 5, both the can 130 and the cap plate 112 may be composed of two types of metal layers, and thus, it is possible to prevent the can 130 from melting and causing side rupture during usage environments and cell and module evaluation events of the secondary battery. In addition, during a cell event of the secondary battery 100, the internal pressure suddenly increases before the gas escapes from the vent portion 120, thereby preventing separation between the cap plate 112 and the can 130. This is because the joining strength between the second metals is higher than the joining strength between the first metals.

In addition, in the secondary batteries 100 according to various embodiments of the present disclosure, it is possible to prevent the crushing of internal parts and electrode plates and the occurrence of events, which are caused in a case where the can 130 is compressed by a force during cell crush/impact evaluation according to strengthening of yield strength due to heterogeneous metals. In addition, in a case of assembling the can 130 and the cap plate 112 of the secondary battery 100, it is possible to prevent the central portion of the cap plate 112 from collapsing due to the weight of the internal electrode plate.

Although the present disclosure has been described above with respect to embodiments thereof, the present disclosure is not limited thereto. Various modifications and variations can be made thereto by those skilled in the art within the scope of the present disclosure and the equivalent scope of the appended claims.

### DESCRIPTION OF SOME REFERENCE SYMBOLS

100: secondary battery
110: cap assembly
112: cap plate
112a: cap plate
112b: cap plate
114: first terminal
116: second terminal
120: vent portion
120': through-hole
122: first metal layer
124: second metal layer
126: first vertical surface
128: second vertical surface
130: can
130': upper portion of can
132: electrolyte injection port
132': cap
134: first metal layer
136: second metal layer
138: first vertical surface
140: second vertical surface
142: second metal layer
144: first metal layer
146: outer portion
148: inner portion
150: first vertical surface
152: second vertical surface

Embodiments are set out in the following clauses:
1. A secondary battery 100 comprising:
   an electrode assembly comprising a positive electrode plate, a negative electrode plate, and a separator disposed between the positive electrode plate and the negative electrode plate;
   a can 130 configured to provide a space for accommodating the electrode assembly; and
   a cap plate 112 joined to an opening of the can 130 and configured to form a through-hole 120',
   wherein the cap plate 112 comprises a first metal layer 122, 134, 144 formed of a first metal and a second metal layer 124, 136, 142 formed of a second metal different from the first metal, and
   the through-hole 120' is formed to pass through the first metal layer and the second metal layer.
2. The secondary battery 100 according to clause 1, wherein the cap plate 112 has a clad structure composed of the first metal layer 122, 134, 144 and the second metal layer 124, 136, 142.
3. The secondary battery 100 according to clause 1 or 2, wherein a melting point and yield strength of the second metal are respectively higher than a melting point and yield strength of the first metal.
4. The secondary battery 100 according to clause 3, wherein the second metal is any one of stainless steel, nickel, or copper.
5. The secondary battery 100 according to clause 3 or 4, wherein the first metal layer 122, 134 is disposed on an upper portion of the cap plate 112 and joined to a vent portion 120 inserted into the through-hole 120', and the second metal layer 124, 136 is disposed on a lower portion of the cap plate 112.
6. The secondary battery 100 according to clause 5, wherein the second metal layer 124 is disposed on the entirety of the lower portion of the cap plate 112.
7. The secondary battery 100 according to clause 6, wherein the second metal layer 124 is in contact with the can 130.
8. The secondary battery 100 according to clause 5, 6 or 7, wherein the second metal layer 136 is disposed around the through-hole 120'.
9. The secondary battery 100 according to clause 3 or 4, wherein the first metal layer 144 is disposed on a lower portion of the cap plate 112 and joined to a vent portion 120 inserted into the through-hole 120', and the second metal layer 142 is disposed on an upper portion of the cap plate 112.
10. The secondary battery 100 according to clause 9, wherein the can 130 comprises an inner portion 148 and an outer portion 146 formed of different metals, and the inner portion 148 of the can is joined to the second metal layer 142.
11. The secondary battery 100 according to clause 10, wherein the second metal layer 142 is disposed on an entirety of the upper portion of the cap plate 112.
12. The secondary battery 100 according to clause 10 or 11, wherein the inner portion 148 is formed of a same material as the second metal layer 142.
13. The secondary battery 100 according to clause 10, 11 or 12, wherein a melting point and yield strength of a material of the inner portion 148 are respectively higher than a melting point and yield strength of a material of the outer portion 146.
14. The secondary battery 100 according to clause 13, wherein the material of the inner portion 148 is any one of stainless steel, nickel, or copper.
15. The secondary battery 100 according to any one of clauses 10 to 14, wherein a joining strength between the second metal layer 142 and the inner portion 148 is higher than a joining strength between the first metal layer 144 and the vent portion 120.

## Claims

1. A secondary battery (100) comprising:
an electrode assembly comprising a positive electrode plate, a negative electrode plate, and a separator disposed between the positive electrode plate and the negative electrode plate;
a can (130) configured to provide a space for accommodating the electrode assembly; and
a cap plate (112) joined to an opening of the can (130) and configured to form a through-hole (120'),
wherein the cap plate (112) comprises a first metal layer (122, 134, 144) formed of a first metal and a second metal layer (124, 136, 142) formed of a second metal different from the first metal, and
the through-hole (120') is formed to pass through the first metal layer and the second metal layer.

2. The secondary battery (100) as claimed in claim 1, wherein the cap plate (112) has a clad structure composed of the first metal layer (122, 134, 144) and the second metal layer (124, 136, 142).

3. The secondary battery (100) as claimed in claim 1 or 2, wherein a melting point and yield strength of the second metal are respectively higher than a melting point and yield strength of the first metal.

4. The secondary battery (100) as claimed in claim 3, wherein the second metal is any one of stainless steel, nickel, or copper.

5. The secondary battery (100) as claimed in claim 3 or 4, wherein the first metal layer (122, 134) is disposed at an upper portion of the cap plate (112) and joined to a vent portion (120) inserted into the through-hole (120'), and the second metal layer (124, 136) is disposed at a lower portion of the cap plate (112).

6. The secondary battery (100) as claimed in claim 5, wherein the second metal layer (124) is disposed at the entirety of the lower portion of the cap plate (112).

7. The secondary battery (100) as claimed in claim 6, wherein the second metal layer (124) is in contact with the can (130).

8. The secondary battery (100) as claimed in claim 5, 6 or 7, wherein the second metal layer (136) is disposed around the through-hole (120').

9. The secondary battery (100) as claimed in claim 3 or 4, wherein the first metal layer (144) is disposed at a lower portion of the cap plate (112) and joined to a vent portion (120) inserted into the through-hole (120'), and the second metal layer (142) is disposed at an upper portion of the cap plate (112).

10. The secondary battery (100) as claimed in claim 9, wherein the can (130) comprises an inner portion (148) and an outer portion (146) formed of different metals, and the inner portion (148) of the can is joined to the second metal layer (142).

11. The secondary battery (100) as claimed in claim 10, wherein the second metal layer (142) is disposed at an entirety of the upper portion of the cap plate (112).

12. The secondary battery (100) as claimed in claim 10 or 11, wherein the inner portion (148) is formed of a same material as the second metal layer (142).

13. The secondary battery (100) as claimed in claim 10, 11 or 12, wherein a melting point and yield strength of a material of the inner portion (148) are respectively higher than a melting point and yield strength of a material of the outer portion (146).

14. The secondary battery (100) as claimed in claim 13, wherein the material of the inner portion (148) is any one of stainless steel, nickel, or copper.

15. The secondary battery (100) as claimed in any one of claims 10 to 14, wherein a joining strength between the second metal layer (142) and the inner portion (148) is higher than a joining strength between the first metal layer (144) and the vent portion (120).
